# EUROPEAN PATENT APPLICATION

(11) **EP 1 264 660 A2**
(43) Date of publication of application: **11.12.2002**
(21) Application number: 02012253.7
(22) Date of filing: 04.06.2002
(51) Int. Cl.: B23Q 37/00, B23Q 41/00, B23B 27/20

(54) **Multitool support for faceting machines or the like, provided with means to automatically change the tools**

(30) Priority: 08.06.2001 IT VR20010065
(71) Applicant: Faimond S.r.l., 36057 Arcugnano, Vicenza (IT)
(72) Inventor: Dal Lago Gianluigi, 36057 Arcugnano Vicenza (IT)
(74) Representative: Savi, Alberto

(57) **Abstract**

The present means are installed on faceting machines and permit to reach two aims: the former consists in changing, in a completely automatic way, the tools that are arranged along the circular border of a rotary support and the latter consists in effecting the change in speed, namely, without interrupting the operating cycle, even for an instant.

In general, the border of a fan (1) is provided with a plurality of tools (2). The tools (2) are fixed to respective sliding supports (3) which slide radially in suitable fan seats and are adjusted along radial directions.

The peculiarity of the present invention is the presence of a counterfan (4) which is arranged concentricly and coaxially to the fan (1). The surface of the counterfan (4) is provided with a cam groove (14). A pivot (15) is fixed on each of the tool-sliding supports (3) and acts inside the cam groove so that the position of the tools is determined by the position of the counterfan and respective cam.

## Description

The present invention refers to a multitool fan to be mounted on a faceting machine or the like, the peculiarity of which is the presence of means and devices to automatically change the tools.

In particular, this invention proposes means and devices that permit to reach two aims: the former consists in changing, in a completely automatic way, the tools that are arranged along the circular border of a rotary support and the latter consists in effecting the change in speed without interrupting the operating cycle, even for an instant.

The advantages reached by utilizing the means of the present invention are the following: a better production capacity of the diamond machine or faceting machine on which such means are installed and a better execution of the operative phases.

As is known, the faceting machines or diamond machines are machine tools that are carried out and arranged to work objects and jewels, especially made of precious metals, such as chains, necklaces, bracelets or the like.

Most of diamond-tipped machines are carried out by utilizing some essential components such as a piece-supporting and feeding unit which usually comprises either a swivel vice or a band-vice or a dividing vice as well as a working unit which is provided with diamond-tipped tools which are arranged on an operative head in the upper part of the vice.

The operative head includes incising diamond-tipped tools which can be arranged on working units showing either a vertical axis or a horizontal axis depending on the kind of working to be carried out.

In case the working units are disposed along a horizontal axis, special "fan" supports are used usually. These fan supports comprise a pair of tool-holding wheels which are arranged in a symmetric way on a suitable swivel support. A plurality of tools (in general three but they may be six or even more) are mounted along the peripheric border of each wheel radially.

The said tools are mounted in succession along the border of the fan support and show different profiles and shapes. However, by adjusting the device in a suitable way, it is possible to utilize only the necessary tool required to perform a particular working action or cycle. This is made possible by adjusting the position of the necessary tool manually; it is sufficient to angularly shift both wheels so that the tool in question reaches the wished position.

The rotation of the wheels is effected manually and can be facilitated in part by means of either gears or a central gear or a jack system or an air (pneumatic) system or the like.

Anyhow, the choice of a tool involves a series of actions for the operators to be carried out, namely, the stopping of the fan, the rotation of both wheels to reach the tool to be used and finally, the re-starting of the fan showing the new tool.

All the above-described operations cause considerable troubles to the operators and above all, it is necessary to stop the whole production cycle whenever the tool must be substituted, which is obviously very disadvantageous.

The aim of the present invention is to conceive and carry out a multitool fan to be mounted on faceting machines, diamond machines or the like, which fan removes the aforesaid inconveniences by utilizing suitable means and devices which permit the tool to be substituted automatically without the necessity of a manual intervention of the operator.

An immediate advantage of the present invention is that it is no more necessary that the operator stops the fan, rotates the two wheels to reach the tool to be used and finally, re-starts the fan equipped with the new tool.

The invention in question utilizes a tool-replacing system that avoids the necessity of stopping or slowing down the tool-holding fan. More generally, the present invention eliminates the necessity of stopping or at least slowing down the production cycle because the tool substitution is done "in speed", namely, without stopping the support fan, nor the piece to be worked.

All the above-identified aims and advantages are reached according to the present invention by utilizing a multitool fan to be mounted on a faceting machine or diamond machine or the like, characterized in that it is provided with means and devices which permit and automatic substitution of the tools which are mounted on sliding supports which are arranged radially to the fan; the tools are fixed through a suitable pivot to a cam groove obtained on a counterfan which is arranged concentricly and coaxially to the said fan; the rotation of the counterfan is independent of the rotation of the fan but it can be synchronized so as the fan and the counterfan can rotate in synchronism; a substitution of the tool corresponds to a change in the speed of the fan in respect to the speed of the counterfan.

Further features and details of the present invention will be better undertood from the following description given as a non-limiting example with reference to the accompanying drawings wherein:
Fig. 1 represents a schematic view in lateral section of the fan according to the invention on the whole;
Fig. 2 is a schematic front view of the tool-supporting fan provided with means permitting an automatic change of the tools according to the invention;

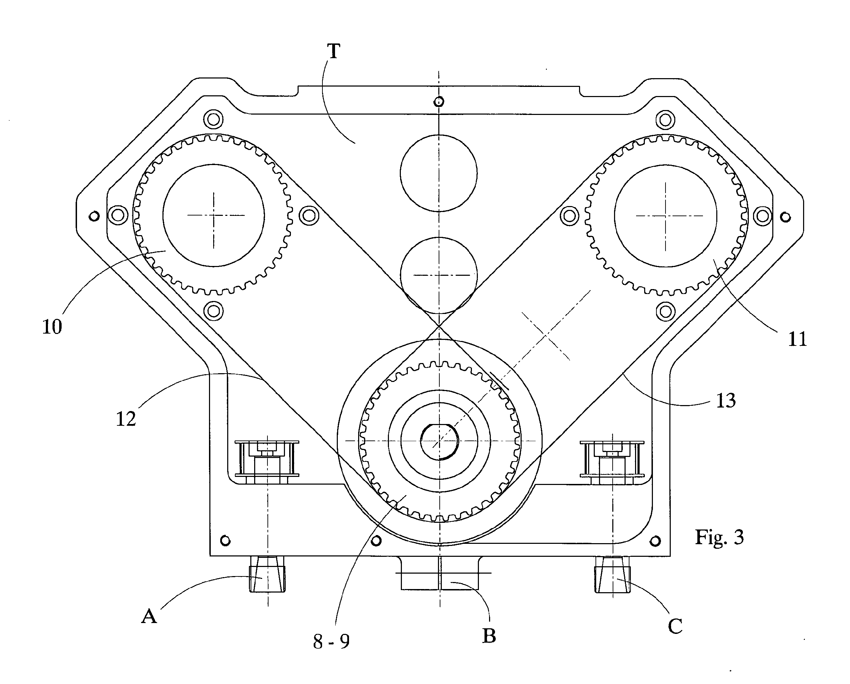

Fig. 3 shows a schematic view of the fan according to the invention, represented from the rear side and representing the actuating means of the two synchronizing units;
Fig. 4 is a schematic view of the head that supports the fan according to the invention in working phase, the tools showing a vertical axis;
Figures 5-7 represent schematic views of the fan-supporting head in working phase, the tools showing a vertical axis.

With reference to the accompanying drawings, number 1 denotes a fan according to the present invention on the whole. The fan 1 is provided with means for an automatic change of the tools, shows a circular shape and standard sizes and is supported by a support or head T which holds the fan in position on a horizontal axis.

A plurality of tools 2 are arranged along the border of the fan 1. The tools 2 are fixed to respective sliding supports 3 which slide radially in suitable seats of the fan so as to be shifted and adjusted along radial directions.

The fan 1 rotates on ball-bearings 3' that have a horizonal axis.

The peculiarity of the present invention is the presence of a counterfan 4 that is arranged concentricly and coaxially to the fan 1.

More precisely, the counterfan 4 is mounted on a supporting shaft 5 which is disposed inside the supporting shaft 6 of the fan 1 so that the two coaxial shafts can rotate relatively to each other through the interposition of suitable ball bearings 7.

The rear outer part of the two shafts 5 and 6 is equipped with two respective pulleys 8 and 9 which are actuated by two independent motors 10 and 11 which actuate the pulleys 8 and 9 through drive belts 12 and 13.

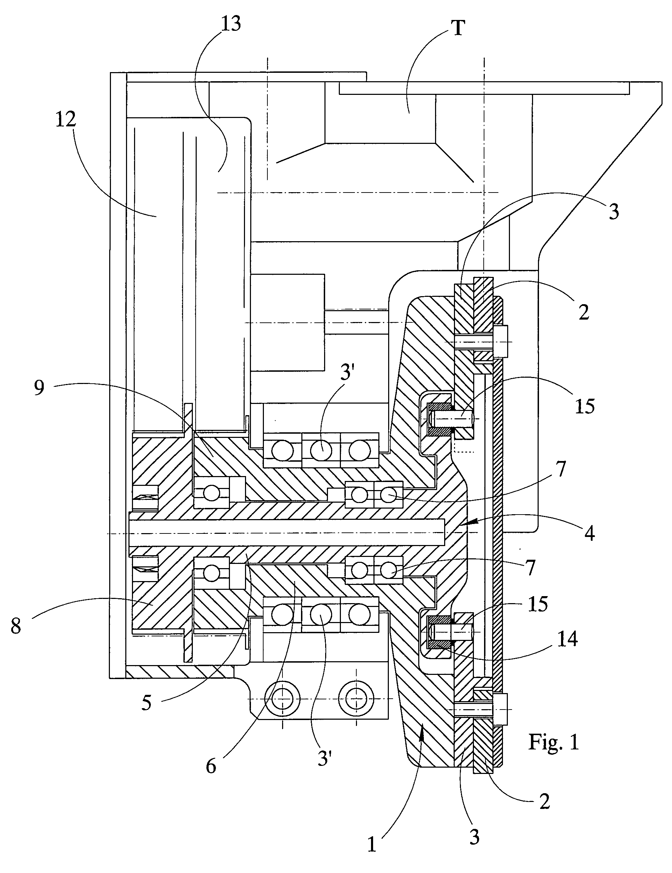

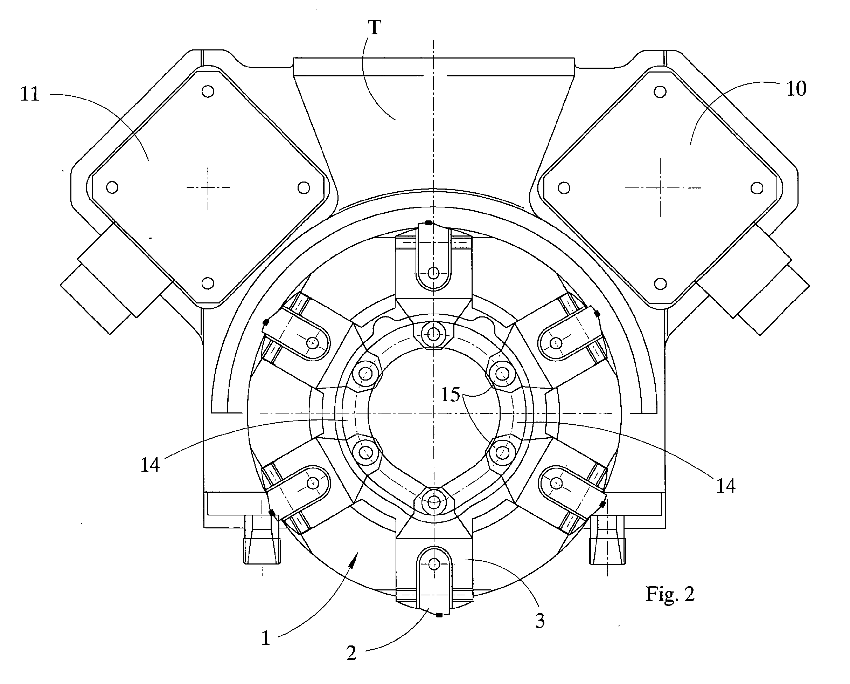

The front part of the surface of the counterfan 4 shows a cam groove 14 as it can be seen in Figures 1 and 2. The cam groove 14 is circular and concentric essentially, except a sector that projects slightly towards the outside.

Each of the tool-sliding support 3 is provided with a pivot 15 that acts inside the cam groove 14. Each pivot 15 is fixed to the respective sliding support 3. Consequently, the position of the tools is determined by the relative position of the counterfan and the respective cam.

The rotation of the two motors is synchronized and therefore, the fan 1 and the counterfan 4 rotate simultaneously and have the same speed in the operative working conditions. One of the tools juts out of the other tools on the crown of the fan because this tool is pushed by the protruding grooved part of the cam 14.

When it is necessary to change the tool, for instance in case a different incision profile is necessary, it is sufficient to slow down, for a short period of time, the speed of the motor that actuates the counterfan 4 in comparison with the motor that actuates the fan 1 so that the relative position of the protruding part of the cam in respect to the fan changes till when the wished tool juts out.

It is evident that the described operation takes place in a very short period of time.

The change of the tool is nearly imperceptible visually and it is not necessary to interrupt the cycle of production, which is very advantageous.

As an advantage, the shape of the cam groove can be varied depending on the number of tools and in addition, a plurality of protruding sectors can be utilized, for instance when more incising tools must be used simultaneously. Another advantage is the possibility that the sunken shape of the groove 14 and the protruding shape of the pivots 15 be inverted, namely, the said cam groove is replaced with a cam projection. In this case, the pivots of the tool-sliding supports must take a corresponding sunken shape.

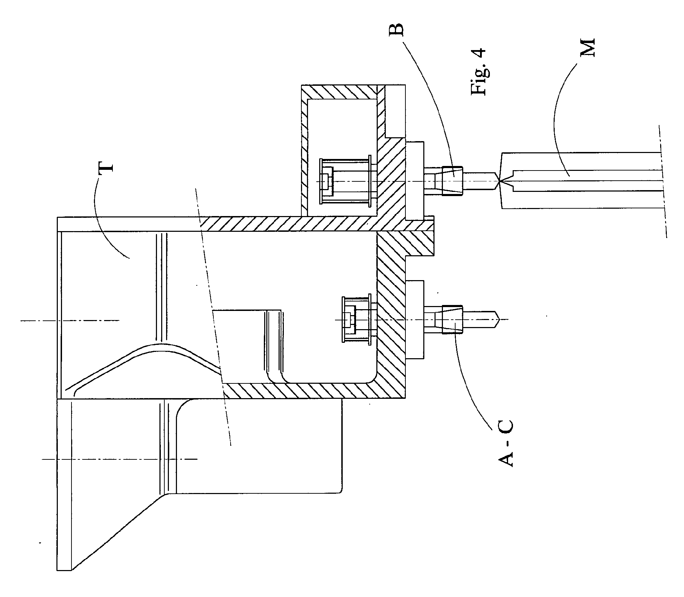

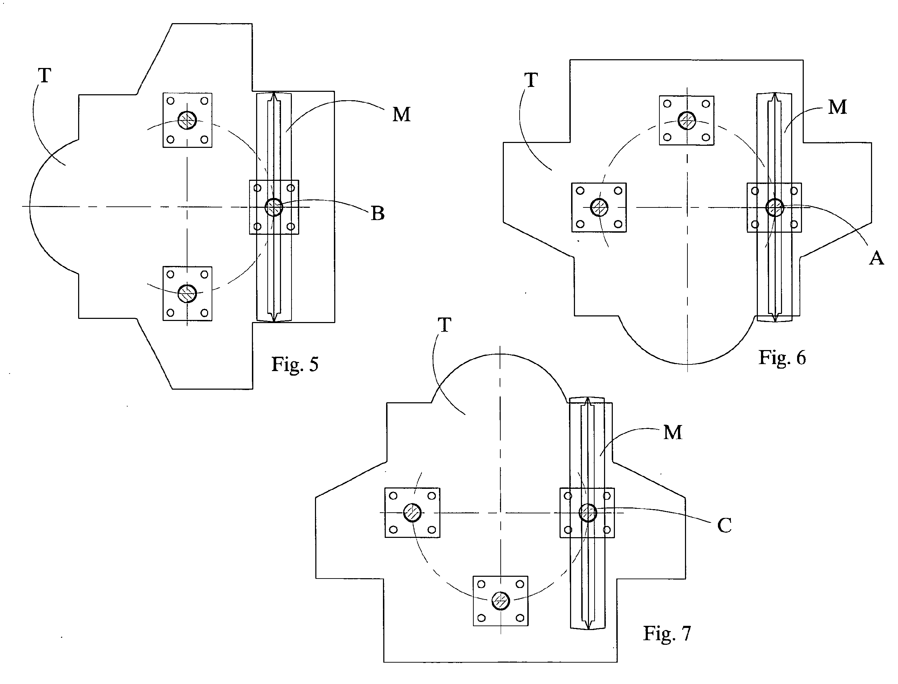

The tool-holding fan 1 is mounted on a head T which is provided with further diversified units A, B and C of spindles and tools which in this case have a vertical axis and operate in respect to the lower vice indicated with M in Figures 4-7.

Naturally, whatever number and arrangement of the tools that show a vertical axis is possible. Only the working barycentre of the piece to be worked on the vice must be the same.

Both the tools A, B and C that show a vertical axis and the fan unit 1 act on the same working centre of the piece because the whole head T can move automatically and through an electric control from a horizontal position to a vertical position on maintaining the same working centre and obtaining a plurality of workings of different kind on the same piece of work.

A technician of this field can make further changes and variants in the device for an automatic change of the tools according to the present invention and obtain solutions that are to be considered as included in the scope of protection of the invention which is further defined in the features of the following claims.

## Claims

1. Multitool fan (1) to be mounted on a diamond machine or the like, **characterized in that** for being provided with means and devices permitting an automatic change of the tools (2), the tools being mounted on sliding supports (3) arranged radially to the fan and being connected through a suitable pivot (15) with a cam groove (14) obtained on a counterfan (4) arranged coaxially and concentricly to the said ventil; the rotation of the counterfan (4) is independent of the rotation of the fan (1) but it can be synchronized so as the fan (1) and the counterfan (4) can rotate in synchronism; a substitution of the tool corresponds to a change in the speed of the fan (1) in respect to the speed of the counterfan (4).

2. Multitool fan to be mounted on a diamond machine or the like, provided with means and devices for an automatic change of the tools as claimed in the foregoing claim, **characterized in that** a plurality of tools (2) is arranged along the border of the fan (1), which tools are fixed to respective slide supports (3) which slide in suitable seats of the fan so as to be moved and adjusted along radial directions.

3. Multitool fan to be mounted on a diamond machine or the like as claimed in the foregoing claims, **characterized in that** the said counterfan (4) is mounted on a supporting shaft (5) which is arranged inside the supporting shaft (6) of the fan (1) so that the two coaxial shafts can rotate in respect to each other through the interposition of suitable ball bearings (7).

4. Multitool fan to be mounted on a diamond machine or the like, as claimed in the foregoing claims, **characterized in that** two respective pulleys (8, 9) are fixed on the outer rear part of the two shafts (5, 6), which pulleys (8, 9) take motion from two independent motors (10, 11) which actuate the pulleys through drive belts (12, 13).

5. Multitool fan to be mounted on a diamond machine or the like, as claimed in the foregoing claims, **characterized in that** in the front part, the surface of the counterfan (4) is provided with a cam groove (14) which is circular and concentric essentially except at least a sector that projects slightly towards the outside.

6. Multitool fan to be mounted on a diamond machine or the like, as claimed in the foregoing claims, **characterized in that** each of the tool-sliding support (3) is provided with a pivot (15) that acts inside the cam groove (14); each pivot (15) is fixed to the respective sliding support (3) and consequently, the position of the tools is determined by the relative position of the counterfan and the respective cam.

7. Multitool fan to be mounted on a diamond machine or the like, as claimed in the foregoing claims, **characterized in that** the rotation of the two motors is synchronized and therefore, the fan (1) and the counterfan (4) rotate simultaneously and have the same speed in the operative working conditions, one of the tools juts out of the other tools on the crown of the fan because this tool is pushed by the protruding grooved part of the cam (14).

8. Multitool fan to be mounted on a diamond machine or the like, as claimed in the foregoing claims, **characterized in that** the automatic change of the tools is caused by the change in the relative speed of the fan (1) in comparison with the relative speed of the counterfan (4).

9. Multitool fan to be mounted on a diamond machine or the like, as claimed in the foregoing claims, **characterized in that** the shape of the cam groove can be varied depending on the number of tools and in addition, a plurality of protruding sectors can be utilized, for instance when more incising tools must be used simultaneously.

10. Multitool fan to be mounted on a diamond machine or the like, as claimed in the foregoing claims, **characterized in that** there is the possibility that the sunken shape of the groove (14) and the protruding shape of the pivots (15) be inverted, namely, the said cam groove is replaced with a cam projection and in this case, the pivots of the tool-sliding supports must take a corresponding sunken shape.

11. Multitool fan to be mounted on a diamond machine or the like, as claimed in the foregoing claims, **characterized in that** the tool-holding fan (1) is mounted on a head (T) which is provided with further diversified units (A, B and C) of spindles and tools which in this case have a vertical axis and operate in respect to the lower vice indicated with (M) and work on the same working centre of the piece.
